# EUROPEAN PATENT SPECIFICATION

(11) **EP 2 197 079 B1**
(45) Date of publication and mention of the grant of the patent: **15.04.2015**
(21) Application number: 09150086.8
(22) Date of filing: 06.01.2009
(51) Int. Cl.: H02G 11/02

(54) **Earphone line retracting device, automatic line retracting earphone, non-radiation wire mobile phone and electronic device**
Kopfhörerkabel-Einzugsvorrichtung, Kopfhöher mit automatischem Kabeleinzug, nichtstrahlendes Drahtmobiltelefon und elektronische Vorrichtung
Dispositif de rétraction de ligne d'écouteur, ligne automatique de rétraction d'écouteur, téléphone mobile à fil sans rayonnement et dispositif électronique

(30) Priority: 15.12.2008 CN 200810183186
(43) Date of publication of application: 16.06.2010
(73) Proprietor: Xinjiang Tiandi Group, Xinjiang 830002 (CN)
(72) Inventor: Zheng, Daqing, Wulumuqi Xinjiang 830002 (CN)
(74) Representative: Leman Consulting S.A.

(56) References cited:
- CN-A- 101 237 713
- US-B2- 6 858 951

## Description

### Field of the Invention

The present invention relates to an earphone line retracting device, an automatic line retracting earphone, a non-radiation wire mobile phone and an electronic device.

### Background of the Invention

With the extensive application of electronic products such as mobile phones, laptop computers, and the products with capability of aiding hearing, etc., it has been found that the earphone of the above products has problems of winding, knotting, and inconvenience of taking and keeping in use, which has caused some troubles to users and even further made some users give up using earphone. In addition, when using the electronic products, the users cannot avoid electromagnetic radiation resulting from the electronic products, causing harm to the users' health. For example, when the user puts the mobile phone on his ear to communicate with other person, the electromagnetic radiation resulting from the mobile phone causes harm to the user's brain. It has been found from experiments and study that the harm resulting from electromagnetic radiation to the brain is reduced dramatically when the mobile phone keeps a distance away from the ear by, for example, replacing the speaker inside the mobile phone with a earphone. By this way, the harm resulting from electromagnetic radiation to the brain is reduced 99%.

Chinese patent No. 200510004919.9 discloses a mobile phone with a built-in non-radiation earphone and a built-in non-radiation earphone assembly in which a earphone line is wound by a winder built in the mobile phone, so that when the mobile phone is not used, the earphone line is wound into the mobile phone by the built-in winder, and thus avoid knotting, winding, and facilitate to take and use the earphone, as well as reduce dramatically the electromagnetic radiation. However, it is known from specification and the figures that drive means (a micromotor, or a spring, or a clockwork spring) in an earphone line retracting device directly drives the winder, and thus, when a micromotor is used as the drive means, because the micromotor rotates with high speed and low torque, it can not provide enough torque to make the winder rotate. If the torque of the micromotor is increased, the size of the micromotor is increased too, and as a result, the drive means can not be built in the small mobile phone. Even though the size of the mobile phone can be increased to accommodate a big motor, the members of the mobile phone can also be damaged or even the user can be harmed due to the high speed of the motor. In addition, when a spring or a clockwork spring is used as the drive means, the torque of the spring or of the clockwork spring is big or bigger enough, but winding distance is short, and thus, when the spring or the clockwork spring drives the winder, the retracting distance is short, and thus can not retract the line well.
Document CN101237713A discloses an earphone cable wire winder, an earphone assembly and a movable terminal. The earphone cable wire winder comprises a driving device, an earphone cable spool and a reducer, wherein the driving device is connected with the earphone cable spool through the reducer.
According to document CN 101237713A, as the reducer connects the driving device and the earphone cable spool, the rotation speed of the earphone cable spool is controlled within a reasonable range, but when the retraction of the earphone line is completed, since the user cannot turn off the power instantly, the driving device continues to rotate. At this time, since the earphone cable spool cannot continue to rotate, the driving device is easy to be damaged and the members, such as the earphone line, are easy to be damaged too due to over load.
Document US6858951 B2 discloses a wire rewinding box with a recharge unit, including a casing, a windlass, a coil spring, a communication wire, a recharge unit and a press handle. Inside the casing is the formation of an accommodating chamber. The windlass is installed in the accommodating chamber. The coil spring is installed between the casing and the windlass. The communication wire is wound on the windlass. The recharge unit is installed inside the casing, consisting of a gear mechanism, a generator and a battery. The press handle is installed at one side of the casing. The gear mechanism is installed between the windlass, the press handle and the generator.

### Summary of the Invention

In order to solve the above problems, the object of the present invention is to provide an earphone line retracting device to solve the problem existing in the prior art that the speed of the winder is high, the torque of the winder is not big enough, or the winding distance is short when the drive means directly drives the winder.

Another object of the present invention is to provide an automatic line retracting earphone having the earphone line retracting device.

Another object of the present invention is to provide a non-radiation wire mobile phone having the automatic line retracting earphone.

Another object of the present invention is to provide an electronic device having the automatic line retracting earphone.

In order to solve the above problems, an earphone line retracting device according to the present invention at least comprises: a winder, drive means driving the winder, and signal connector means, the earphone line retracting device further comprises shift gear means, by which the drive means drives the winder and a clutch is arranged between the shift gear means and the winder, the winder being connected to the shift gear means by the clutch characterized in that the drive means is a micromotor, the shift gear means is a decelerator means.

Further, the winder has an inside space, the drive means positioned in the inside space.

Preferably, the shift gear means has at least two gears, adjacent gears engaging each other.

Preferably, the signal connector means comprises a circuit board and a plurality of annular conductive sheets, and connects to outside signal by spring feeler and its lead wire.

Preferably, the signal connector means is a wirelessly connected signal connector means.

Preferably, the clutch is a resistance oil clutch.

Preferably, the earphone line retracting device is built in the housing of an electronic device.

Preferably, when the drive means is a micromotor, the power source of the earphone line retracting device is also the power source of the electronic device in which the earphone line retracting device is built.

Preferably, when the drive means is a spring or a clockwork spring, the retracting switch of the earphone line is a press wheel.

An automatic line retracting earphone according to the present invention comprises: an earphone, an earphone line, and an earphone line retracting device described above.

A non-radiation wire mobile phone according to the present invention comprises: a main body of the mobile phone, an earphone, an earphone line, and an earphone line retracting device. The housing of the non-radiation wire mobile phone is provided with a socket for the earphone. The earphone can be removably inserted into the socket. The earphone line and the earphone line retracting device are arranged in the housing of the mobile phone. The earphone line retracting device at least comprises a winder, drive means driving the winder, and signal connector means. The earphone is provided with a voice transmitter. The earphone is formed integrally with the voice transmitter and a voice receiver.

The earphone line retracting device further comprises shift gear means, by which the drive means drives the winder and a clutch is arranged between the shift gear means and the winder, the winder being connected to the shift gear means by the clutch. The non-radiation wire mobile phone according to the present invention is characterized in that the drive means is a micromotor, the shift gear means is a decelerator means.

An electronic device according to the present invention comprises: a main body of the electronic device, an earphone, an earphone line, and an earphone line retracting device. The housing of the electronic device is provided with a socket for the earphone. The earphone can be inserted into the socket. The earphone line and the earphone line retracting device are arranged in the housing of the mobile phone. The earphone line retracting device at least comprises a winder, drive means driving the winder, and signal connector means. The earphone line retracting device further comprises shift gear means, by which the drive means drives the winder, and a clutch is arranged between the shift gear means and the winder, the winder being connected to the shift gear means by the clutch. The electronic device according to the present invention is characterized in that: the drive means is a micromotor, the shift gear means is a decelerator means.

### Brief Description of the Drawings

Fig.1 is a view showing the structure of an earphone line retracting device of the first embodiment according to the present invention.
Fig.2 is a top view of the earphone line retracting device of the first embodiment according to the present invention.
Fig.3 is a view showing the structure of a signal connector means of the earphone line retracting device of the first embodiment according to the present invention.
Fig.4 is a top view of an earphone line retracting device of the third embodiment according to the present invention.
Fig.5 is a view showing the structure of an automatic line retracting earphone of the fifth embodiment according to the present invention.
Fig.6 is a view showing the structure of a non-radiation wire mobile phone of the seventh embodiment according to the present invention.
Fig.7 is a view showing the structure of an electronic device of the ninth embodiment according to the present invention.

### Detailed Description of the Invention

The detailed description of the present invention is made by reference to the drawings.

### First Embodiment

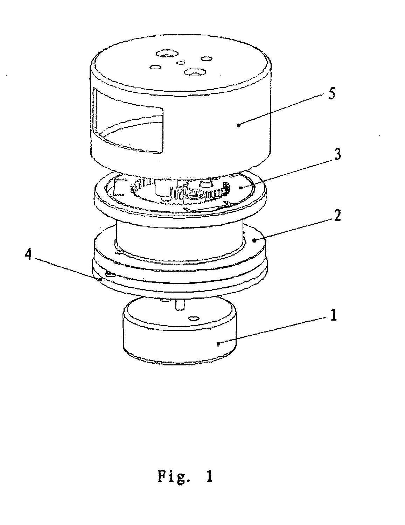

Fig.1 is a view showing the structure of an earphone line retracting device of the first embodiment according to the present invention. As shown in Fig. 1, an earphone line retracting device comprises: a micromotor 1, a winder 2, a decelerator means 3, signal connector means 4, and a housing 5. When the earphone line retracting device is put inside an electronic device, the housing is not needed. As shown in Fig. 1, in this embodiment, in order to reduce the size of the earphone line retracting device, there is a space in winder 2 in which micromotor 1 is positioned. Alternatively, there is not a space in winder 2, and in this case, micromotor 1 is positioned outside winder 2.

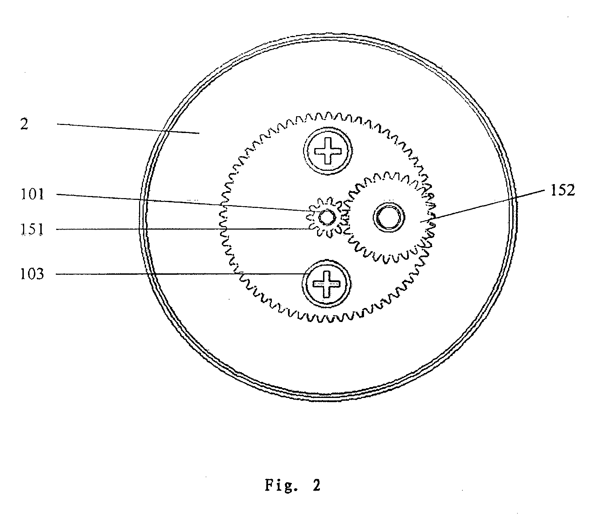

Fig.2 is a top view of the earphone line retracting device of the first embodiment according to the present invention. As shown in Fig. 2, decelerator means 3 comprises gear 151 and gear 152. Gear 152 connects to winder 2 by its outer teeth. Gear 151 and gear 152 engage each other and are mounted on drive axis 101 of micromotor 1. When drive axis 101 rotates, gear 151 and gear 152 rotate, causing winder 2 to rotate. Nut 103 is used to fix decelerator means 3 and micromotor 1.

It is understood that gear 151 and gear 152 in decelerator means 3 shown in Fig. 2 are used to illustrate the embodiment. The persons skilled in the art can determine the number and the size of the gear, and determine the position relationship of the micromotor and the winder according to the practical needs. The embodiment of the present invention does not intend to make limitations. For example, the gear can be three or more in which the gears are arranged in a proportion and two adjacent gears engage each other.

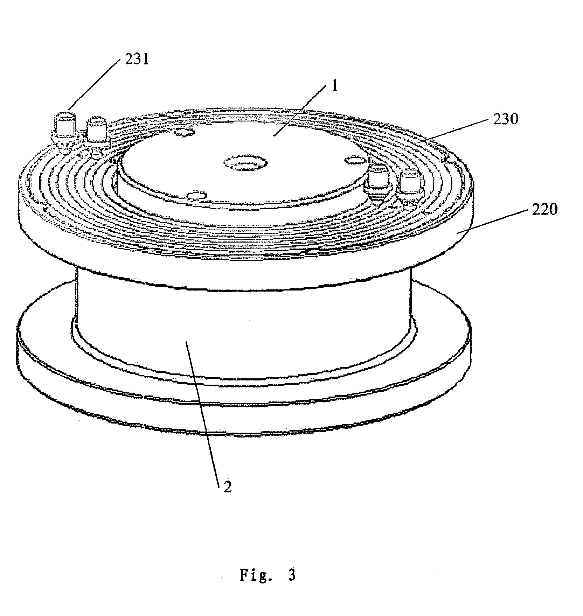

Fig. 3 shows the other side of winder 2, namely, the structure of a signal connector means 4. As shown in Fig. 3, signal connector means 4 in the embodiment comprises a circuit board 220 and a plurality of annular conductive sheets 230. The plurality of annular conductive sheets 230 are connected to one end of the earphone line, and are connected to outside signal line (when signal connector means 4 is arranged in an electronic device, the outside signal line is the signal line inside of the electronic device) by spring feeler 231 and lead wire (not shown). In the structure described above, when winder 2 rotates to cause the earphone line to wind or spread, one end of the earphone line keeps connected to the outside signal by annular conductive sheets 230 and spring feeler 231, whereby maintaining connection and effectiveness of the signal. It is understood that the signal connector means in the present invention can be wireless signal connector means.

According to the earphone line retracting device of the present invention, when micromotor 1 rotates, gear 151 and gear 152 connected to micromotor 1 rotate, causing winder 2 to rotate, whereby achieving the effect of low speed and high torque.

In the prior art, a micromotor rotates to directly drive a winder to rotate in order to retract earphone line. Because the micromotor rotates at as high as thousands rpm (rounds per minute) to tens of thousand rpm, the earphone line is retracted instantly by the winder. The too high speed of the retraction of the line may cause damage to the device and to the user. By contrast, in the present invention, there is decelerator means in which gears engage each other, so that the speed of the winder reduces to a proper and safe range and at the same time increases torque of the motor, whereby solving the problems existing in the prior art.

### Second Embodiment

The following is another embodiment of the invention. In this embodiment, the drive means is a spring or a clockwork spring, and the shift gear means connected to the spring or the clockwork spring is accelerator means. The structure of the accelerator means is opposite to the structure of the decelerator means in the first embodiment, namely, the number of the teeth of the gear on the side of the spring or the clockwork spring is less than the number of the teeth of the gear on the side of the winder. Other parts in this embodiment are the same as in first embodiment. In addition, in this embodiment, the retracting switch of the earphone line retracting device is a press wheel. The description of the press wheel can be found in Chinese patent No. 200510004919.9, and thus the description of the press wheel is omitted. In this embodiment, the accelerator means can increase retracting distance, so that the earphone line can be retracted wholly in the earphone line retracting device.

### Third Embodiment

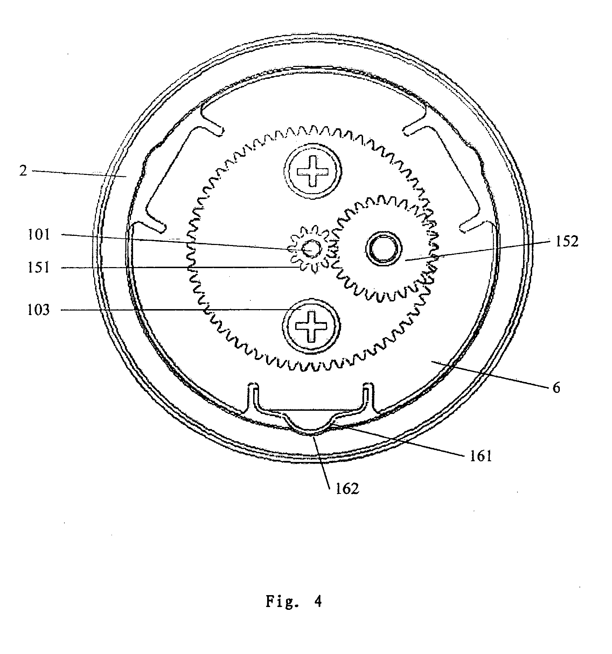

The following is another embodiment of the invention. Fig.4 is a top view of the third embodiment according to the present invention. As shown in the figure, the difference between the earphone line retracting device in the third embodiment and the earphone line retracting device in the first embodiment is that a clutch 6 is arranged between winder 2 and decelerator means 3, and winder 2 is connected to decelerator means 3 by clutch 6. Inside clutch 6 is provided with gear engaging gear 152. Outside clutch 6 is provided with one or plurality of convex 161. Convex 161 engage concave 162 on winder 2. Other parts in this embodiment are the same as in first embodiment.

Preferably, the convex on the outside of clutch is resilient. For example, the convex can be spring sheet.

The force exerted by concave 162 on convex 161 is bigger than a predetermined threshold. The convex 161 causes winder 2 to rotate via concave 162. When the force exerted by concave 162 on convex 161 is smaller than a predetermined threshold, convex 161 stops causing winder 2 to rotate, but causes micromotor to rotate without load, whereby protecting the micromotor effectively from being damaged by over load (the coil of the micromotor may be damaged by over load). When the earphone line is retracted in the second embodiment, axis 101 of the micromotor causes the decelerator means to rotate, and finally causes the winder to rotate. When the retraction of the earphone line is completed, since the user cannot turn off the power instantly, the micromotor continues to rotate. At this time, since the winder cannot continue to rotate, the micromotor is easy to be damaged and the members, such as the earphone line, are easy to be damaged due to over load if there is no clutch, By contrast, in this embodiment, because there is a clutch causing the micromotor to rotate without load, the micromotor and the members are protected effectively. In addition, the clutch can also reduce the resistant force when the user pulls the earphone line out of the winder. For example, when the user pulls the earphone out, the winder and the decelerator means disengage the micromotor because of the clutch, and at the same time, the winder rotates to let the line out while the micromotor and the decelerator means remain static.

Further, the clutch in this embodiment can be a resistance oil clutch.

### Fourth Embodiment

The following is another embodiment of the invention. In this embodiment, the drive means is a spring or a clockwork spring, and the shift gear means connected to the spring or the clockwork spring is accelerator means. The structure of the accelerator means is opposite to the structure of the decelerator means in the first embodiment. Other parts in this embodiment are the same as in third embodiment. In addition, in this embodiment, the retracting switch of the earphone line retracting device is a press wheel. In addition, the clutch in this embodiment can be a resistance oil clutch. In addition, when the retraction of the earphone line is completed, the winder disengages the drive means via the clutch, whereby avoiding damaging the members such as earphone line, etc. In addition, when the earphone line is pulled out of the winder, the resistant force is also reduced.

### Fifth Embodiment

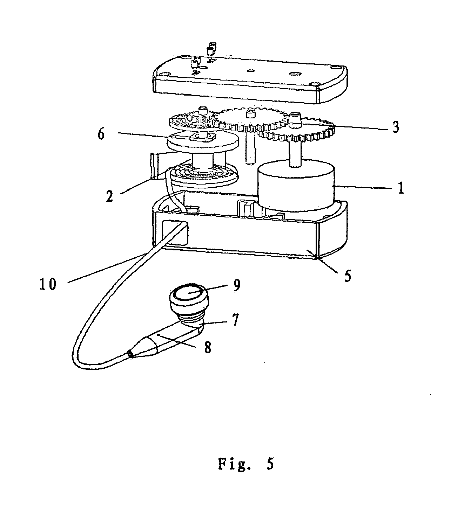

The following is description of an automatic line retracting earphone in the fifth embodiment of the invention. Fig.5 is a view showing the structure of an automatic line retracting earphone of the fifth embodiment according to the present invention. As shown in Fig. 5, an automatic line retracting earphone according to the present invention comprises: a earphone 7 integrally formed with a voice transmitter 8 and a voice receiver 9, a earphone line 10, and an earphone line retracting device comprising a micromotor 1, a winder 2, a decelerator means 3, a signal connector means 4, a clutch 6, and a housing 5. Although earphone 7 in this embodiment is formed with voice transmitter 8 and voice receiver 9, the earphone 7 can be formed with voice transmitter 8 only or formed with voice receiver 9 only.

In the prior art, a micromotor rotates to directly drive a winder to rotate in order to retract earphone line. Because the micromotor rotates at as high as thousands rpm (rounds per minute) to tens of thousand rpm, the earphone line is retracted instantly by the winder. The too high speed of the retraction of the earphone line may cause damage to the device and to the user. By contrast, in the present invention, there is decelerator means in which gears engage each other, so that the speed of the winder reduces to a proper and safe range and at the same time increases torque of the motor, whereby solving the problems existing in the prior art.

In addition, in this embodiment, earphone line 10 is formed of a plurality of soft wires and tension-enforced fibre strands, and is coated with insulating material with high wearable property. The earphone line in this embodiment has a long service life.

### Sixth Embodiment

The following is another embodiment of the invention. In this embodiment, the drive means is a spring or a clockwork spring, and the shift gear means connected to the spring or the clockwork spring is accelerator means. The structure of the accelerator means is opposite to the structure of the decelerator means in the fifth embodiment. Other parts in this embodiment are the same as in fifth embodiment. In addition, in this embodiment, accelerator means can increase retracting distance, whereby the earphone line retracted wholly inside the earphone line retracting device.

### Seventh Embodiment

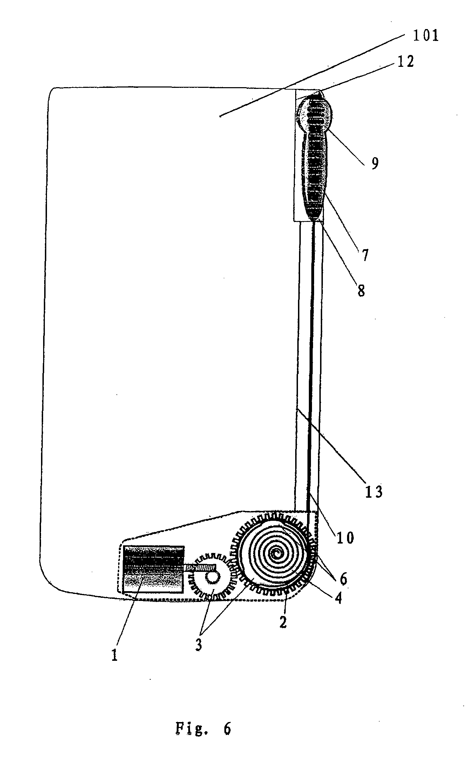

The following is description of a non-radiation wire mobile phone in the seventh embodiment of the invention. Fig.6 is a view showing the structure of a non-radiation wire mobile phone of the seventh embodiment according to the present invention. As shown in the figure, a non-radiation wire mobile phone according to the present invention comprises a main body 101 of the mobile phone and an automatic line retracting earphone. The automatic line retracting earphone comprises: a micromotor 1, a winder 2, a decelerator means 3, a signal connector means 4, a clutch 6, a earphone line 10, and a earphone 7 formed with a voice transmitter 8 and a voice receiver 9. Earphone line 10 is connected to a signal line inside the mobile phone by signal connector means 4. In addition, the housing of the non-radiation wire mobile phone is provided with a socket 12 for earphone 7. Earphone 7 is inserted into socket 12. Other parts of the automatic line retracting earphone are arranged in the housing of the mobile phone. Although the earphone line retracting device of the present invention is arranged at the lower part of the mobile phone, the earphone line retracting device can also be arranged in other parts of the mobile phone.

In the prior art, a micromotor rotates to directly drive a winder to rotate in order to retract earphone line. Because the micromotor rotates at as high as thousands rpm (rounds per minute) to tens of thousand rpm, the earphone line is retracted instantly by the winder. The too high speed of the retraction of the line may cause damage to the device and to the user. By contrast, in the present invention, there is decelerator means in which gears engage each other, so that the speed of the winder reduces to a proper and safe range and at the same time increases torque of the motor, whereby solving the problems existing in the prior art.

In addition, as shown in the figure, in this embodiment, main body 101 of the mobile phone is provided at its one side with a line groove 13. One end of line groove 13 is connected to winder 2, and the other end of line groove 13 is connected to socket 12. Earphone line 10 is wound on winder 2 and extends in line groove 13 to connect to earphone 7.

In addition, in this embodiment, micromotor 1 and main body 101 of the mobile phone use the same one power source (not shown), and thus another power source for micromotor 1 is not needed.

In addition, in this embodiment, the switch of micromotor 1 uses the hang-up key that is used to disconnect the line when the communication on the mobile phone is completed. Therefore, when the communication on the mobile phone is completed, the retraction of the earphone line starts when the user just presses the hang-up key. Alternatively, a separate switch of micromotor 1 can be arranged.

### Eighth Embodiment

The following is another embodiment of the invention. In this embodiment, the drive means in the mobile phone is a spring or a clockwork spring, and the shift gear means connected to the spring or the clockwork spring is accelerator means. The structure of the accelerator means is opposite to the structure of the decelerator means in the fifth embodiment. Other parts in this embodiment are the same as in seventh embodiment. In addition, in this embodiment, accelerator means can increase retracting distance, whereby the earphone line retracted wholly inside the earphone line retracting device.

### Ninth Embodiment

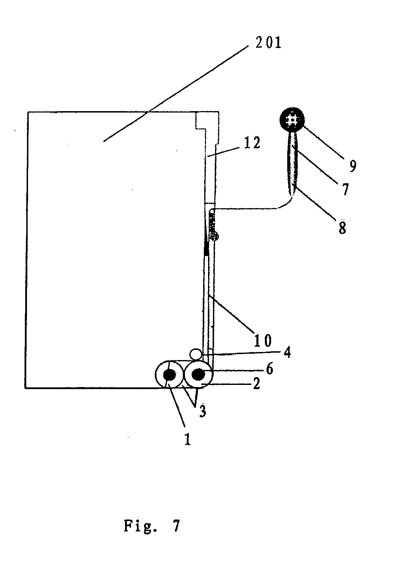

The following is description of an electronic device in the ninth embodiment of the invention. Fig.7 is a view showing the structure of an electronic device of the ninth embodiment according to the present invention. In this embodiment, the electronic device can be any electronic devices, such as MP4 serial products, personal computers, hand game players, etc, which use earphone. As shown in the figure, an electronic device of the present invention comprises a main body 201 of the electronic device and an automatic line retracting earphone. The automatic line retracting earphone comprises: a micromotor 1, a winder 2, a decelerator means 3, a signal connector means 4, a clutch 6, a earphone line 10, and a earphone 7 formed with a voice transmitter 8 and a voice receiver 9. Earphone line 10 is connected to a signal line inside the mobile phone by signal connector means 4. In addition, the housing of the electronic device is provided with a socket 12 for earphone 7. Earphone 7 is inserted into socket 12. Other parts of the automatic line retracting earphone are arranged in the housing of the electronic device. Although the earphone line retracting device of the present invention is arranged at the lower part of the electronic device, the earphone line retracting device can also be arranged in other parts of the electronic device.

### Tenth Embodiment

The following is another embodiment of the invention. In this embodiment, the drive means in the electronic device is a spring or a clockwork spring, and the shift gear means connected to the spring or the clockwork spring is accelerator means. The structure of the accelerator means is opposite to the structure of the decelerator means in the ninth embodiment. Other parts in this embodiment are the same as in the ninth embodiment.

## Claims

1. An earphone line retracting device at least comprising: a winder (2), drive means driving the winder, and signal connector means (4), the earphone line retracting device further comprises shift gear means, by which the drive means drives the winder (2), a clutch (6) arranged between the shift gear means and the winder (2), the winder (2) being connected to the shift gear means by the clutch (6), **characterized in that** the drive means is a micromotor (1), the shift gear means is a decelerator means (3).

2. An earphone line retracting device according to claim 1 **characterized in that** the winder (2) has an inside space, the drive means being positioned in the inside space.

3. An earphone line retracting device according to claim 1 **characterized in that** the shift gear means has at least two gears (151, 152), adjacent gears engaging each other.

4. An earphone line retracting device according to claim 1 **characterized in that** the signal connector means (4) comprises a circuit board (220) and a plurality of annular conductive sheets (230), and connects to outside signal by spring feeler (231) and its lead wire.

5. An earphone line retracting device according to claim 1 **characterized in that** the signal connector means (4) is a wirelessly connected signal connector means (4).

6. An earphone line retracting device according to claim 1, **characterized in that** the clutch (6) is a resistance oil clutch.

7. An earphone line retracting device according to claim 1 **characterized in that** the earphone line retracting device is built in the housing of an electronic device.

8. An earphone line retracting device according to claim 1, **characterized in that** the power source for the earphone line retracting device is the power source for the electronic device in which the earphone line retracting device is built.

9. An earphone line retracting device according to claim 1, **characterized in that** the retracting switch of the earphone line of the earphone line retracting device is a press wheel.

10. An automatic line retracting earphone comprising: an earphone, an earphone line, and an earphone line retracting device, **characterized in that** the earphone line retracting device is the earphone line retracting device in any one of claims 1-9.

11. An automatic line retracting earphone according to claim 10, **characterized in that** the earphone is provided with a voice transmitter, and the earphone is formed integrally with the voice transmitter and a voice receiver.

12. An automatic line retracting earphone according to claim 10, **characterized in that** the earphone line is formed of a plurality of soft wires and tension-enforced fibre strands, and is coated with insulating material with high wearable property.

13. A non-radiation wire mobile phone comprising: a main body (101) of the mobile phone, an earphone (7), an earphone line (10), and the earphone line retracting device according to claim 1, the housing of the non-radiation wire mobile phone provided with a socket for the earphone, the earphone removable inserted into the socket, the earphone line and the earphone line retracting device arranged in the housing of the mobile phone, the earphone provided with a voice transmitter, and the earphone formed integrally with the voice transmitter and a voice receiver, a clutch (6) is arranged between the shift gear means and the winder (2), the winder being connected to the shift gear means by the clutch (6) **characterized in that** the drive means is a micromotor (1), the shift gear means is a decelerator means (3).

14. A non-radiation wire mobile phone according to claim 13 **characterized in that** the winder (2) has an inside space, the drive means being positioned in the inside space.

15. A non-radiation wire mobile phone according to claim 13 **characterized in that** the shift gear means has at least two gears (151, 152), adjacent gears engaging each other.

16. A non-radiation wire mobile phone according to claim 13 **characterized in that** the signal connector means (4) comprises a circuit board (220) and a plurality of annular conductive sheets (230), and connects to outside signal by spring feeler (231) and its lead wire.

17. A non-radiation wire mobile phone according to claim 13 **characterized in that** the signal connector means (4) is a wirelessly connected signal connector means (4).

18. A non-radiation wire mobile phone according to claim 13 **characterized in that** the non-radiation wire mobile phone is provided at its one side with a line groove (13), one end of the line groove connected to the winder (2), the other end of the line groove (13) connected to the socket (12), the earphone line (10) wound on the winder (2) and extending in the line groove (13) to connect to the earphone (7).

19. A non-radiation wire mobile phone according to claim 13 **characterized in that** the earphone line is formed of a plurality of soft wires and tension-enforced fibre strands, and is coated with insulating material with high wearable property.

20. A non-radiation wire mobile phone according to claim 13, **characterized in that** the clutch (6) is a resistance oil clutch.

21. A non-radiation wire mobile phone according to claim 13, **characterized in that** the micromotor (1) and the main body (101) of the mobile phone use the same one power source.

22. A non-radiation wire mobile phone according to claim 13, **characterized in that** the switch of the micromotor (1) uses the hang up key that is used to disconnect the line when the communication on the mobile phone is completed.

23. An electronic device comprising: a main body (201) of the electronic device, an earphone (7), an earphone line (10), and the earphone line retracting device according to claim 1, the housing of the electronic device provided with a socket for the earphone, the earphone removably inserted into the socket, the earphone line and the earphone line retracting device arranged in the housing of the electronic device, a clutch (6) is arranged between the shift gear means and the winder, the winder connected to the shift gear means by the clutch (6), **characterized in that** the drive means is a micromotor (1), the shift gear means is a decelerator means (3).

24. An electronic device according to claim 23, **characterized in that** the electronic device is MP4 serial products.

25. An electronic device according to claim 23, **characterized in that** the electronic device is a personal computer.

26. An electronic device according to claim 23, **characterized in that** the electronic device is a hand game player.

## Patentansprüche

1. Kopfhörerkabel-Einzugsvorrichtung mit mindestens: einem Wickler (2), einem Antriebsmittel, das den Wickler antreibt, und einem Signalsteckverbinder (4), wobei die Kopfhörerkabel-Einzugsvorrichtung des weiteren ein Schaltgetriebe umfasst, womit das Antriebsmittel den Wickler (2) antreibt, eine Kupplung (6) zwischen dem Schaltgetriebe und dem Wickler (2), wobei der Wickler (2) mit dem Schaltgetriebe durch die Kupplung (6) verbunden ist, **gekennzeichnet dadurch, dass** das Antriebsmittel ein Mikromotor (1) ist und das Schaltgetriebe ein Verzögerer (3).

2. Kopfhörerkabel-Einzugsvorrichtung nach Anspruch 1, **gekennzeichnet dadurch, dass** der Wickler (2) einen Innenraum hat, in dem sich das Antriebsmittel befindet.

3. Kopfhörerkabel-Einzugsvorrichtung nach Anspruch 1, **gekennzeichnet dadurch, dass** das Schaltgetriebe mindestens zwei Getriebe (151,152) hat, wobei benachbarte Getriebe ineinander eingreifen.

4. Kopfhörerkabel-Einzugsvorrichtung nach Anspruch 1, **gekennzeichnet dadurch, dass** der Signalsteckverbinder (4) eine Leiterplatte (220) und eine Vielzahl von ringförmigen leitfähigen Blechen (230) umfasst und mit dem Außensignal durch einen Federfühler (231) und dessen Zuleitungsdraht verbunden ist.

5. Kopfhörerkabel-Einzugsvorrichtung nach Anspruch 1, **gekennzeichnet dadurch, dass** der Signalsteckverbinder (4) ein drahtlos angeschlossener Signalsteckverbinder (4) ist.

6. Kopfhörerkabel-Einzugsvorrichtung nach Anspruch 1, **gekennzeichnet dadurch, dass** die Kupplung (6) eine Ölwiderstandskupplung ist.

7. Kopfhörerkabel-Einzugsvorrichtung nach Anspruch 1, **gekennzeichnet dadurch, dass** die Kopfhörerkabel-Einzugsvorrichtung in das Gehäuse einer elektronischen Vorrichtung eingebaut ist.

8. Kopfhörerkabel-Einzugsvorrichtung nach Anspruch 1, **gekennzeichnet dadurch, dass** die Energiequelle für die Kopfhörerkabel-Einzugsvorrichtung die Energiequelle für die elektronische Vorrichtung ist, in die die Kopfhörerkabel-Einzugsvorrichtung eingebaut ist.

9. Kopfhörerkabel-Einzugsvorrichtung nach Anspruch 1, **gekennzeichnet dadurch, dass** der Einzugsschalter des Kopfhörerkabels der Kopfhörerkabel-Einzugsvorrichtung ein Druckrad ist.

10. Automatischer Kopfhörer mit Kabeleinzug mit: einem Kopfhörer, einem Kopfhörerkabel und einer Kopfhörerkabel-Einzugsvorrichtung, **gekennzeichnet dadurch, dass** die Kopfhörerkabel-Einzugsvorrichtung die Kopfhörerkabel-Einzugsvorrichtung nach einem beliebigen der Ansprüche 1-9 ist.

11. Automatischer Kopfhörer mit Kabeleinzug nach Anspruch 10, **gekennzeichnet dadurch, dass** der Kopfhörer einen Audio-Sender aufweist und der Kopfhörer einstückig mit dem Audio-Sender und einem Audio-Empfänger ist.

12. Automatischer Kopfhörer mit Kabeleinzug nach Anspruch 10, **gekennzeichnet dadurch, dass** das Kopfhörerkabel aus einer Vielzahl von weichen Drähten und Fasersträngen mit verstärkter Spannung gebildet ist und mit hochverschleißfestem Isoliermaterial verkleidet ist.

13. Nichtstrahlendes Drahtmobiltelefon mit: einem Hauptkörper (101) des Mobiltelefons, einem Kopfhörer (7), einem Kopfhörerkabel (10) und der Kopfhörerkabel-Einzugsvorrichtung nach Anspruch 1, wobei das Gehäuse des nichtstrahlenden Drahtmobiltelefons eine Steckdose für den Kopfhörer aufweist, der Kopfhörer entfernbar in die Steckdose eingefügt ist, das Kopfhörerkabel und die Kopfhörerkabel-Einzugsvorrichtung in dem Gehäuse des Mobiltelefons angeordnet sind, der Kopfhörer einen Audio-Sender aufweist und einstückig mit dem Audio-Sender und einem Audio-Empfänger ist und eine Kupplung (6) zwischen dem Schaltgetriebe und dem Wickler (2) angebracht ist, wobei der Wickler mit dem Schaltgetriebe durch die Kupplung (6) verbunden ist, **gekennzeichnet dadurch, dass** das Antriebsmittel ein Mikromotor (1) ist und das Schaltgetriebe ein Verzögerer (3).

14. Nichtstrahlendes Drahtmobiltelefon nach Anspruch 13, **gekennzeichnet dadurch, dass** der Wickler (2) einen Innenraum hat und das Antriebsmittel sich in dem Innenraum befindet.

15. Nichtstrahlendes Drahtmobiltelefon nach Anspruch 13, **gekennzeichnet dadurch, dass** das Schaltgetriebe mindestens zwei Getriebe (151,152) hat, wobei benachbarte Getriebe ineinander eingreifen.

16. Nichtstrahlendes Drahtmobiltelefon nach Anspruch 13, **gekennzeichnet dadurch, dass** der Signalsteckverbinder (4) eine Leiterplatte (220) und eine Vielzahl von ringförmigen leitfähigen Blechen (230) umfasst und mit dem Außensignal durch einen Federfühler (231) und dessen Zuleitungsdraht verbunden ist.

17. Nichtstrahlendes Drahtmobiltelefon nach Anspruch 13, **gekennzeichnet dadurch, dass** der Signalsteckverbinder (4) ein drahtlos angeschlossener Signalsteckverbinder (4) ist.

18. Nichtstrahlendes Drahtmobiltelefon nach Anspruch 13, **gekennzeichnet dadurch, dass** das nichtstrahlende Drahtmobiltelefon an seiner einen Seite mit einer Kabelnut (13) versehen ist, deren eines Ende mit dem Wickler (2) verbunden ist und das andere mit der Steckdose (12), wobei das Kopfhörerkabel (10) auf den Wickler (2) gewickelt ist und in der Kabelnut (13) verläuft, um mit dem Kopfhörer (7) verbunden zu werden.

19. Nichtstrahlendes Drahtmobiltelefon nach Anspruch 13, **gekennzeichnet dadurch, dass** das Kopfhörerkabel aus einer Vielzahl von weichen Drähten und Fasersträngen mit verstärkter Spannung gebildet und mit hochverschleißfestem Isoliermaterial verkleidet ist.

20. Nichtstrahlendes Drahtmobiltelefon nach Anspruch 13, **gekennzeichnet dadurch, dass** die Kupplung (6) eine Ölwiderstandskupplung ist.

21. Nichtstrahlendes Drahtmobiltelefon nach Anspruch 13, **gekennzeichnet dadurch, dass** der Mikromotor (1) und der Hauptkörper (101) des Mobiltelefons dieselbe Energiequelle nutzen.

22. Nichtstrahlendes Drahtmobiltelefon nach Anspruch 13, **gekennzeichnet dadurch, dass** der Schalter des Mikromotors (1) die Auflegetaste nutzt, die verwendet wird, um die Verbindung zu trennen, wenn das Telefongespräch beendet ist.

23. Elektronische Vorrichtung mit: einem Hauptkörper (201) der elektronischen Vorrichtung, einem Kopfhörer (7), einem Kopfhörerkabel (10) und der Kopfhörerkabel-Einzugsvorrichtung nach Anspruch 1, wobei das Gehäuse der elektronischen Vorrichtung eine Steckdose für den Kopfhörer aufweist, der Kopfhörer ausbaubar in die Steckdose eingefügt ist, das Kopfhörerkabel und die Kopfhörerkabel-Einzugsvorrichtung in dem Gehäuse der elektronischen Vorrichtung angeordnet sind, eine Kupplung (6) zwischen dem Schaltgetriebe und der Wickler angebracht ist und der Wickler mit dem Schaltgetriebe durch die Kupplung (6) verbunden ist, **gekennzeichnet dadurch, dass** das Antriebsmittel ein Mikromotor (1) ist und das Schaltgetriebe ein Verzögerer (3).

24. Elektronische Vorrichtung nach Anspruch 23, **gekennzeichnet dadurch, dass** die elektronische Vorrichtung ein MP4-Serienprodukt ist.

25. Elektronische Vorrichtung nach Anspruch 23, **gekennzeichnet dadurch, dass** die elektronische Vorrichtung ein PC ist.

26. Elektronische Vorrichtung nach Anspruch 23, **gekennzeichnet dadurch, dass** die elektronische Vorrichtung eine Spielkonsole ist.

## Revendications

1. Dispositif de rétraction de câble d'écouteur comprenant au moins: un enrouleur (2), un moyen d'entraînement actionnant l'enrouleur, et un moyen de connexion de signal (4), le dispositif de rétraction de câble d'écouteur comprend de plus une boîte à vitesses, par laquelle le moyen d'entraînement actionne l'enrouleur (2), un embrayage (6) disposé entre la boîte à vitesses et l'enrouleur (2), l'enrouleur (2) étant connecté à la boîte à vitesses par l'embrayage (6), **caractérisé en ce que** le moyen d'entraînement est un micromoteur (1), la boîte à vitesses est un moyen de décélération (3).

2. Dispositif de rétraction de câble d'écouteur selon la revendication 1 **caractérisé en ce que** l'enrouleur (2) a un espace intérieur, le moyen d'entraînement étant positionné dans l'espace intérieur.

3. Dispositif de rétraction de câble d'écouteur selon la revendication 1 **caractérisé en ce que** la boîte à vitesses a au moins deux engrenages (151,152), des engrenages adjacents s'engageant l'un dans l'autre.

4. Dispositif de rétraction de câble d'écouteur selon la revendication 1 **caractérisé en ce que** le moyen de connexion de signal (4) comprend un circuit imprimé (220) et une pluralité de feuilles conductrices annulaires (230), et se connecte à un signal extérieur par un contact à ressort (231) et son fil de connexion.

5. Dispositif de rétraction de câble d'écouteur selon la revendication 1 **caractérisé en ce que** le moyen de connexion de signal (4) est un connecteur de signal à connexion sans fil (4).

6. Dispositif de rétraction de câble d'écouteur selon la revendication 1, **caractérisé en ce que** l'embrayage (6) est un embrayage à huile de résistance.

7. Dispositif de rétraction de câble d'écouteur selon la revendication 1 **caractérisé en ce que** le dispositif de rétraction de câble d'écouteur est monté dans le logement d'un dispositif électronique.

8. Dispositif de rétraction de câble d'écouteur selon la revendication 1, **caractérisé en ce que** la source d'alimentation pour le dispositif de rétraction de câble d'écouteur est la source d'alimentation pour le dispositif électronique dans lequel le dispositif de rétraction de câble d'écouteur est monté.

9. Dispositif de rétraction de câble d'écouteur selon la revendication 1, **caractérisé en ce que** l'interrupteur de rétraction du câble d'écouteur du dispositif de rétraction de câble d'écouteur est une roulette d'appui.

10. Ecouteur à rétraction de câble automatique comprenant: un écouteur, un câble d'écouteur, et un dispositif de rétraction de câble d'écouteur, **caractérisé en ce que** le dispositif de rétraction de câble d'écouteur est le dispositif de rétraction de câble d'écouteur selon l'une quelconque des revendications 1 à 9.

11. Ecouteur à rétraction de câble automatique selon la revendication 10, **caractérisé en ce que** l'écouteur est pourvu d'un transmetteur vocal, et l'écouteur est formé intégralement avec le transmetteur vocal et un récepteur vocal.

12. Ecouteur à rétraction de câble automatique selon la revendication 10, **caractérisé en ce que** le câble d'écouteur est formé d'une pluralité de fils souples et de brins de fibre à tension renforcée, et est revêtu d'un matériau isolant à haute résistance à l'usure.

13. Téléphone mobile à fil sans rayonnement comprenant: un corps principal (101) du téléphone mobile, un écouteur (7), un câble d'écouteur (10), et le dispositif de rétraction de câble d'écouteur selon la revendication 1, le logement du téléphone mobile à fil sans rayonnement étant pourvu d'une prise pour l'écouteur, l'écouteur étant inséré de façon amovible dans la prise, le câble d'écouteur et le dispositif de rétraction de câble d'écouteur étant disposés dans le logement du téléphone mobile, l'écouteur étant pourvu d'un transmetteur vocal, et l'écouteur étant formé intégralement avec le transmetteur vocal et un récepteur vocal, un embrayage (6) est disposé entre la boîte à vitesses et l'enrouleur (2), l'enrouleur étant connecté à la boîte à vitesses par l'embrayage (6) **caractérisé en ce que** le moyen d'entraînement est un micromoteur (1), la boîte à vitesses est un moyen de décélération (3).

14. Téléphone mobile à fil sans rayonnement selon la revendication 13 **caractérisé en ce que** l'enrouleur (2) a un espace intérieur, le moyen d'entraînement étant positionné dans l'espace intérieur.

15. Téléphone mobile à fil sans rayonnement selon la revendication 13 **caractérisé en ce que** la boîte à vitesses a au moins deux engrenages (151,152), des engrenages adjacents s'engageant l'un dans l'autre.

16. Téléphone mobile à fil sans rayonnement selon la revendication 13 **caractérisé en ce que** le moyen de connexion de signal (4) comprend un circuit imprimé (220) et une pluralité de feuilles conductrices annulaires (230), et se connecte à un signal extérieur par un contact à ressort (231) et son fil de connexion.

17. Téléphone mobile à fil sans rayonnement selon la revendication 13 **caractérisé en ce que** le moyen de connexion de signal (4) est un connecteur de signal à connexion sans fil (4).

18. Téléphone mobile à fil sans rayonnement selon la revendication 13 **caractérisé en ce que** le téléphone mobile à fil sans rayonnement est pourvu sur l'un de ses côtés d'une rainure pour câble (13), une extrémité de la rainure pour câble étant connectée à l'enrouleur (2), l'autre extrémité de la rainure pour câble (13) étant connectée à la prise (12), le câble d'écouteur (10) étant enroulé sur l'enrouleur (2) et s'étendant dans la rainure pour câble (13) pour se connecter à l'écouteur (7).

19. Téléphone mobile à fil sans rayonnement selon la revendication 13 **caractérisé en ce que** le câble d'écouteur est formé d'une pluralité de fils souples et de brins de fibre à tension renforcée, et est revêtu d'un matériau isolant à haute résistance à l'usure.

20. Téléphone mobile à fil sans rayonnement selon la revendication 13, **caractérisé en ce que** l'embrayage (6) est un embrayage à huile de résistance.

21. Téléphone mobile à fil sans rayonnement selon la revendication 13, **caractérisé en ce que** le micromoteur (1) et le corps principal (101) du téléphone mobile utilisent la même source d'alimentation.

22. Téléphone mobile à fil sans rayonnement selon la revendication 13, **caractérisé en ce que** l'interrupteur du micromoteur (1) utilise la touche Raccrocher utilisée pour déconnecter la ligne lorsque la communication avec le téléphone mobile est terminée.

23. Dispositif électronique comprenant: un corps principal (201) du dispositif électronique, un écouteur (7), un câble d'écouteur (10), et le dispositif de rétraction de câble d'écouteur selon la revendication 1, le logement du dispositif électronique étant pourvu d'une prise pour l'écouteur, l'écouteur étant inséré de façon amovible dans la prise, le câble d'écouteur et le dispositif de rétraction de câble d'écouteur étant disposés dans le logement du dispositif électronique, un embrayage (6) est disposé entre la boîte à vitesses et l'enrouleur, l'enrouleur étant connecté à la boîte à vitesses par l'embrayage (6), **caractérisé en ce que** le moyen d'entraînement est un micromoteur (1), la boîte à vitesses est un moyen de décélération (3).

24. Dispositif électronique selon la revendication 23, **caractérisé en ce que** le dispositif électronique est un produit de série MP4.

25. Dispositif électronique selon la revendication 23, **caractérisé en ce que** le dispositif électronique est un ordinateur personnel.

26. Dispositif électronique selon la revendication 23, **caractérisé en ce que** le dispositif électronique est une console de jeux.
